# EUROPEAN PATENT SPECIFICATION

(11) **EP 3 554 791 B1**
(45) Date of publication and mention of the grant of the patent: **16.03.2022**
(21) Application number: 17821879.8
(22) Date of filing: 19.12.2017
(51) Int. Cl.: B29C 48/06, B29C 48/12, B29C 48/14, B29C 48/154, B29C 48/34, B29C 48/91, B29C 48/92

(54) **APPARATUS AND METHOD TO COVER A FILIFORM CORE AND FILIFORM ARTICLE THUS OBTAINED**
VORRICHTUNG UND VERFAHREN ZUM ABDECKEN EINES FASERFÖRMIGEN KERNS UND SO ERHALTENER FASERFÖRMIGER GEGENSTAND
APPAREIL ET PROCÉDÉ DESTINÉS À RECOUVRIR UN NOYAU FILIFORME ET ARTICLE FILIFORME AINSI OBTENU

(30) Priority: 19.12.2016 IT 201600128201
(43) Date of publication of application: 23.10.2019
(73) Proprietor: Lemur S.R.L., 38061 Ala (TN) (IT)
(72) Inventor: KLOTZ, Thomas, 25015 Desenzano Del Garda (IT)
(74) Representative: Petraz, Gilberto Luigi
(86) International application number: PCT/EP2017/083492
(87) International publication number: WO 2018/114915

(56) References cited:
- EP-A1- 1 416 070
- JP-A- S62 123 045
- JP-A- 2002 137 277
- JP-U- H0 490 524
- JP-U- S5 539 811
- US-A- 4 194 462
- US-A- 4 699 579
- US-A- 4 837 448
- US-A- 5 451 355
- US-A- 5 690 971

## Description

### FIELD OF THE INVENTION

The present invention concerns an apparatus and a method to cover a filiform core. In particular, the apparatus and the method allow to obtain, on a filiform core, a layer of permanent covering made of uniform and homogeneous silicone-based polymer material.

The present invention concerns both rigid, and elastic filiform cores, single-filament or multi-filament, or obtained from spinning fibers whether they be vegetable, animal, mineral or of chemical origin.

The present invention also concerns a filiform article thus obtained, comprising a filiform core covered with a layer of silicone-based polymer material. The articles made in this way are suitable for obtaining textile products, or for human or animal use.

### BACKGROUND OF THE INVENTION

In the textile industry, the need has always been felt to confer particular properties on fabrics, for example anti-UV properties, protection against temperature, or humidity, surface adherence, or suchlike.

For example, it is known to cover fabrics with silicone-type polymer materials, for example by laying a layer of polymer material on at least one surface of the fabric, or by immersing the fabric in a bath of polymer material.

However, this solution has the disadvantage that, when the fabric is subjected to frequent washing, the polymer covering can deteriorate.

Furthermore, it can happen that the covering is not uniform and homogeneous over the whole fabric.

In order to try to overcome these disadvantages, it is known to make yarns, externally covered with a film or sheath of polymer material, to modify or improve the characteristics of the yarns.

Document EP-A-0419196 describes an apparatus and a method to cover a filiform core, for example a thread, a cord, or a yarn, which provide to immerse the core in a tank containing a polymer material, and subsequently to make the core thus covered to pass through stabilizing devices to stabilize it before winding it onto a reel.

This solution, however, does not allow to obtain filiform articles having a homogeneous and uniform covering of polymer material. In fact, the thread is translated horizontally, so that the polymer material at the exit of the bath, due to the force of gravity, tends to go downward, and therefore at the entrance of the stabilization treatment zone it is no longer laid homogeneously around the thread.

Moreover, in the tank, air bubbles are generally present, that is, the thread can carry air bubbles with it, which are incorporated into the polymer covering material when it comes out of the bath. The air bubbles make the covering uneven, so it is not possible to obtain a final filiform article that has the desired physical or mechanical properties in every point thereof. In particular, complete protection of the core is not guaranteed.

An apparatus is also known, from WO-A-2012140558, which comprises a tank containing a bath of silicone-type polymer material, in which a roller is disposed rotating on an axis perpendicular to the direction of feed of the thread to be covered. On the outer surface of the roller there are grooves which, during the rotation of the roller in the bath, are filled with polymer material. The thread is made to pass horizontally inside the grooves filled with the polymer material, being partly immersed in it, and exits from the groove provided with the covering. The proposed solution has the disadvantage that the rotating roller generates air bubbles which are incorporated in the polymer material.

Moreover, this solution also has the disadvantage that the polymer material tends to go downward due to the force of gravity before being subjected to the stabilization treatment, so that the covering does not have a uniform thickness over the whole circumference of the thread and does not guarantee the protection of the core.

Especially if the cores or threads to be covered have very fine thicknesses, these solutions do not guarantee complete covering of the threads, and therefore do not guarantee the correct use of the final article.

Furthermore, these solutions do not allow to adjust the thickness of the layer of the polymer material.

Devices are also known that provide to cover a core or a wire with a covering material by means of extrusion.

Document US-A-5,451,355 describes a process to make a composite wire formed by a plurality of filaments combined with a thermoplastic organic material, in which the process provides to co-extrude the wire and the thermoplastic organic material using a device provided with a wire-guide, a central pipe in which the thermoplastic organic material is positioned around the wire, and an exit. The sizes of the exit section and of the central pipe, and the quantity of thermoplastic organic material to be deposited around the wire are set during the initial setting step, and it is not possible to modify it during the process. The thermoplastic materials also have different characteristics from silicone-based polymer materials, requiring formation with the material melted and stabilization using cooling.

Document EP-A-2 352 631 describes a plant for making continuous yarns of silicone material. This document does not provide to cover a yarn with a polymer material, nor to regulate the quantity of material around the yarn and the thickness of the polymer material itself in the final article.

Documents US-B-4,194,462, EP-A-1 416 070, JP-A-H03 180804 concern apparatuses and methods for making optical fibers, which have to have a refraction index and a wave path inside them that are specific and depend on the thickness of the fiber and its covering. For this reason, although they provide co-extrusion of the optical fiber and the covering material, these documents do not describe systems to regulate the flow rate of the covering material or the exit aperture in order to modify the thickness of the covering during the working process. In fact, in these solutions, the thickness of the covering is defined and fixed during the design and initial setting step, depending on the final product to be obtained.

Document JP-A-2006 305770 describes a method to make a cable comprising a metal core covered by rubber, having a smaller external thickness in correspondence with the ends than the thickness of the intermediate portion, so that it does not require subsequent correction workings. The solution described in JP-A-2006 305770 provides to feed a metal cable into an extruder in a horizontal direction, and therefore cannot be used for covering filiform cores of very limited thickness with a polymer material since, as discussed above, it is not possible to guarantee, in a horizontal direction, a uniform thickness of the polymer material around the core.

Document JP-A-S62 123045 describes an apparatus to form cables consisting of four conductor wires, twisted around each other, before feeding them to an extruder and covering them with an insulating material. This solution also provides to feed the cables in a horizontal direction, and therefore cannot be used to cover filiform cores while guaranteeing a uniform thickness of the covering material around them.

US 2014/272417 Al relates to coated conductive polymers for producing capsules ,with conductive fibers having an approximate length between 2 to 14 mm, that are useful for moulding conductive articles.

One purpose of the present invention is to provide an apparatus and a method to cover a filiform core with polymer material, which allow to obtain a filiform article having an adjustable, homogeneous and uniform covering layer around the core.

Another purpose is to provide an apparatus and a method to cover a filiform core with a covering layer which is free of bubbles.

Another purpose is to provide an apparatus and a method to cover a filiform core with a polymer material which are versatile and can be adapted simply and quickly to different thicknesses and types of core.

Another purpose is to obtain an apparatus and a method for covering a filiform core with a polymer material that allow to continuously modify, during working, the quantity of polymer material deposited around the filiform core, and hence the thickness of the final article itself.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, an apparatus to cover a filiform core with a silicone-based polymer material comprises an extrusion station and a stabilization station located downstream of the extrusion station, and at a functional distance therefrom. The distance can be varied as a function of the type of core and/or polymer material, or other factors that affect it on a case by case basis.

The extrusion station is in particular a co-extrusion station configured to receive at entrance the filiform core and the polymer material, and to supply at exit a filiform article comprising the core covered with a film or sheath, made of polymer material with the desired geometric characteristics.

The extrusion station comprises a co-extrusion body suitable to receive the polymer material, a feeder body provided with a calibrating head in which the filiform core to be covered transits centrally, and an exit nozzle through which the filiform core exits from the co-extrusion body, with the polymer material disposed at least partly around it, along an extrusion axis, forming an extruded filiform article.

Inside the co-extrusion body the polymer material, fed as desired, is disposed so as to surround the filiform core uniformly, at least in correspondence with an exit aperture of the exit nozzle.

In some embodiments, the exit aperture can be conformed so that the polymer material is disposed around the entire circumference of the filiform core.

According to possible variants, the exit aperture can be conformed so that the polymer material is disposed only in correspondence with one or more angular sectors disposed around the filiform core.

The calibrating head cooperates with first feed means configured to feed the filiform core with a desired tension. The co-extrusion body cooperates with second feed means configured to feed the polymer material by means of compression. The polymer material is extruded together with the filiform core through the exit aperture, so that air bubbles do not form in the exiting article.

According to some embodiments, the calibrating head is aligned along the extrusion axis, coaxial with the co-extrusion body at least in proximity to the exit nozzle, and defines with the exit nozzle a transit channel for the polymer material.

According to other embodiments, the calibrating head is mobile axially in the direction of the extrusion axis and is associated with positioning means configured to move the calibrating head and position it at a desired height with respect to the exit nozzle, to modify the amplitude of the transit channel and consequently the thickness of the polymer material around the filiform core and hence the overall thickness of the extruded article.

According to some embodiments, the positioning means can be driven when the apparatus is started, or during normal functioning, so as to modify continuously the quantity of polymer material deposited around the filiform core, without needing machine downtimes or apparatus modifications.

In accordance with some embodiments, the apparatus provides metering devices that allow the desired regulation of the amount of polymer material fed.

In accordance with some embodiments, the invention provides to adjust the co-extrusion channel, and therefore the amount of polymer material fed in the unit of time and in relation to the speed of advance of the filiform core.

The co-extrusion means have their extrusion axis substantially vertical so that the exiting filiform article is tensed by its own weight.

According to a variant, means to at least partly or temporarily stabilize the covering layer of polymer material can be provided at exit from the calibrating head.

Drawing devices are also present downstream of the stabilization station, suitable to exert a controlled traction force on the extruded article, a force that acts in the direction of the extrusion axis.

According to variant embodiments, in correspondence with the drawing devices there are thickness detection devices able to detect the thickness of the article in transit. The thickness detection devices can be connected in feedback to the adjustment devices of the polymer material and/or to adjust other factors connected to the filiform core and/or the application of the covering polymer material.

According to other embodiments, the thickness detection devices can be connected in feedback to the calibrating head in order to move it axially along the extrusion axis so as to increase or reduce the amplitude of the transit channel depending on the thickness detected.

The present invention also concerns a method to cover a filiform core with a film of polymer material.

The method provides to:
- feed a filiform core with a desired tension toward co-extrusion means making said core transit axially in a calibrating head;
- feed a polymer material so that it at least partly surrounds the filiform core in correspondence with said co-extrusion means;
- co-extrude the filiform core and the polymer material along a substantially vertical axis;
- exert a traction force on the extruded filiform article by drawing devices that substantially act in the direction of the weight force.

The method according to the present invention also provides to move the calibrating head axially in the direction of the extrusion axis and to position it at a desired height with respect to the exit, in order to modify the amplitude of the transit channel and consequently the quantity of polymer material deposited around the filiform core and the thickness of the extruded article.

According to some embodiments, in correspondence with the co-extrusion means, the polymer material is disposed so as to surround the filiform core on the entire circumference of the latter.

According to a variant, in correspondence with the co-extrusion means, the polymer material is disposed around the filiform core only for a portion of the circumference of the latter, for example for one or more angular sectors.

In accordance with some embodiments the polymer material is disposed with a uniform thickness around the filiform core.

The method also provides, downstream of the extrusion step, to treat the extruded article in order to stabilize it.

According to some embodiments, the method provides to exert a controlled traction force on the extruded article by means of drawing devices that act in the direction of the weight force.

According to some embodiments, the polymer material is silicone in liquid form, or silicone rubber. The choice of silicone is particularly indicated when particular characteristics are to be conferred on the final product, such as for example, surface adherence or resistance to temperature, to UV rays, to humidity, or to aggressive environments. In fact different additives can be added to it according to requirements.

This modifies the rheological characteristics of the material itself, hence its viscosity and flow, and consequently the layer deposited, given the same processing parameters. In the same way, as the flow rate varies, and hence the speed of advance of the silicone inside the apparatus, it is possible to have other variations in the viscosity that require additional modifications. Furthermore, depending on the type of filiform core, the compatibility and adhesion characteristics between the core and the covering material can cause other adjustments to the process.

Therefore, depending on the resistance to heat of the core, on the type of silicone used (liquid or silicone rubber), on the layer of silicone deposited, on the time needed for it to completely vulcanize and on how much the layer manages to protect the covered core, the speed of advance of the filiform core must be able to be regulated. For these reasons, especially when silicone is used, it is important to be able to modify the flow rate of the material, the amplitude of the transit channel and the speed of advance of the filiform core continuously during working, so that it is possible to produce different products without needing machine downtimes and/or replacements of parts of the apparatus.

### BRIEF DESCRIPTION OF THE DRAWINGS

These and other characteristics of the present invention will become apparent from the following description of some embodiments, given as a non-restrictive example with reference to the attached drawings wherein:

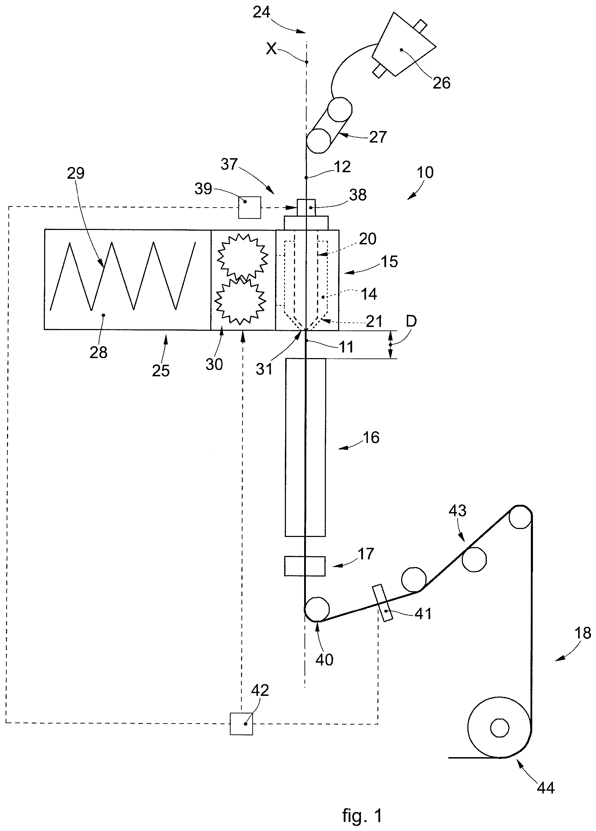

- fig. 1 is a schematic lateral view of an apparatus to cover a filiform core with a covering of polymer material;
- fig. 2 is an enlarged detail of fig. 1 with the calibrating head in an operating condition;
- fig. 3 is an enlarged detail of fig. 1 with the calibrating head in another operating condition, different from that of fig. 2;
- fig. 4 is a section view of an extruded article obtainable for example with the calibrating head in the position of fig. 2;
- fig. 5 is a section view of an extruded article obtainable for example with the calibrating head in the position of fig. 3;
- fig. 6 is an enlarged detail of fig. 1 in accordance with a variant solution;
- fig. 7 is a section along the line VII-VII of fig. 6.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

With reference to the attached drawings, an apparatus 10 according to the invention can be used to cover a filiform core 12 with a covering of polymer material 14, to obtain a filiform article 11.

The apparatus 10 in particular allows to cover filiform cores 12 having thicknesses even less than 0.7 mm, and to obtain filiform articles 11 with thicknesses of less than 2 mm.

According to some embodiments, the thickness of the filiform core 12 can be comprised from dtex 8 to dtex 20,000.

According to other embodiments, the thickness of the filiform core 12 can be comprised between about 50 µm and about 2000 µm.

According to other embodiments, the thickness of the filiform core 12 can be comprised between about 50 µm and about 1500 µm.

According to some embodiments, the thickness of the filiform article 11 can be comprised between about 50 µm and about 2000 µm.

According to other embodiments, the thickness of the polymer material 14 can be comprised between about 50 µm and about 500 µm. The thickness of the polymer material 14 can be determined according to the properties and characteristics to be conferred on the filiform core 12, to the type of filiform core 12 itself, or to the type of polymer material 14 used, or to particular applications of use of the filiform article 11.

According to some embodiments, the filiform core 12 can be of the single-filament or multi-filament type, or it can be obtained by spinning fibers of vegetable, animal, mineral, or chemical origin, both rigid and elastic.

For example, but not restrictively, the filiform core 12 can be selected from fibers of cotton, wool, linen, possibly hybrid or modified, silicone, polyamide, polyester, nylon, terephthalate, polyethylene, polypropylene, polyester, or their copolymers and derivatives, metal threads of titanium, copper, iron, steel, or their alloys, insulators, or conductors, etc.

According to some embodiments, the polymer material 14 can be a silicone in liquid form, or a silicone rubber. The silicone material, in particular, is suitable to confer on the filiform core 12 protection against UV rays, temperature, humidity, or particular chemical agents.

Moreover, the layer of polymer material 14 allows to improve the surface adherence of the filiform core 12, so as to obtain filiform articles 11 which can be used, for example, for sewing, making fabrics of any type, or being knitted, machine-worked or hand-worked.

The polymer material 14, moreover, depending on the article 11 to be made, can comprise additives suitable to confer on it particular properties and characteristics, for example of a conductive type.

Possible applications of the present invention can concern the production of articles 11 having an internal filiform core 12 made of silicone, covered with a layer of silicone-type polymer material 14, wherein the core 12 and the layer of polymer material 14 are made with silicones of the same or different type.

According to some embodiments, for example, an article 11 can be made having a core 12 made of conductive silicone, covered with a layer of polymer material 14 of non-conductive silicone.

According to possible variant embodiments, an article 11 can be made having a core 12 made of non-conductive silicone, covered with a layer of polymer material 14 of conductive silicone.

The conductive silicone can be made, for example, by loading a silicone polymer material with highly conductive particles of silver aluminum, silver-plated copper, nickel-plated graphite, pure nickel, etc.

The apparatus 10 allows to obtain an article 11 substantially continuously by co-extrusion.

The apparatus 10 comprises an extrusion station 15, configured to receive the core 12 and a polymer material 14 in fluid form, and to supply an article 11 comprising the core 12 covered by the desired polymer material 14 at exit from a production line 31.

The production line 31 comprises an outlet nozzle 23 and a feeder body 20 which cooperates with the outlet nozzle 23 to define the final shape of the article 11.

Downstream of the extrusion station 15 the apparatus 10 comprises a stabilization station 16, and possibly a cooling station 17, located downstream of the stabilization station 16.

The apparatus 10 also comprises a collection unit 18 to collect the article 11 obtained, disposed downstream of the stabilization station 16, or of the possible cooling station 17.

The extrusion station 15 comprises a co-extrusion body 21 suitable to receive and contain the polymer material 14 in fluid form and under pressure, also possibly minimum, which cooperates with the production line 31 to supply at exit from the extrusion station 15 the filiform core 12 covered by the polymer material 14.

The co-extrusion body 21 and the feeder body 20, according to the invention, are configured and disposed in such a way that the polymer material 14 is disposed around the filiform core 12 in correspondence with the outlet nozzle 23.

According to some embodiments, the outlet nozzle 23 is located in direct communication with the co-extrusion body 21 and is provided with an aperture 32 through which the filiform core 12, covered by the polymer material 14 exiting from the co-extrusion station 15, is able to transit.

The outlet nozzle 23 can also comprise a flared portion 33 whose section decreases from the co-extrusion body 21 toward the aperture 32, defining a lead-in to facilitate the advance of the polymer material 14 toward the filiform core 12 and toward the exit.

Advantageously, the aperture 32 has a cross section shape coordinated to the cross section of the filiform core 12 to be covered, so that the polymer material 14 is disposed uniformly around it.

According to some embodiments, the feeder body 20 is aligned along an extrusion axis X and is disposed coaxial to the co-extrusion body 21 at least in proximity to the aperture 32.

According to some embodiments of the invention, the feeder body 20 comprises a calibrating head 22 suitable to position the filiform core 12 with respect to the aperture 32.

According to some embodiments, the apparatus 10 can comprise a plurality of production lines 31, each consisting of a respective calibrating head 22 and a respective outlet nozzle 23 for the simultaneous production of a corresponding plurality of articles 11.

By way of example, a plurality of calibrating heads 22 can be provided, for example in a number varying from 1 to 15, to simultaneously feed from 1 to 15 cores 12 to a respective production line 31.

The calibrating head 22 comprises a lead-in and connection portion 22a having a flared shape, for example a truncated cone, with a decreasing cross section in the direction of the aperture 32, and a thread-guide nozzle 34 connected to the lead-in and connection zone 22a.

The lead-in and connection zone 22a can have a shape mating with that of the flared portion 33, defining with it a transit channel 36 for the polymer material 14 in fluid form.

The transit channel 36 can have an annular section which narrows in coherence with the conformation of the flared portion 33 toward the aperture 32.

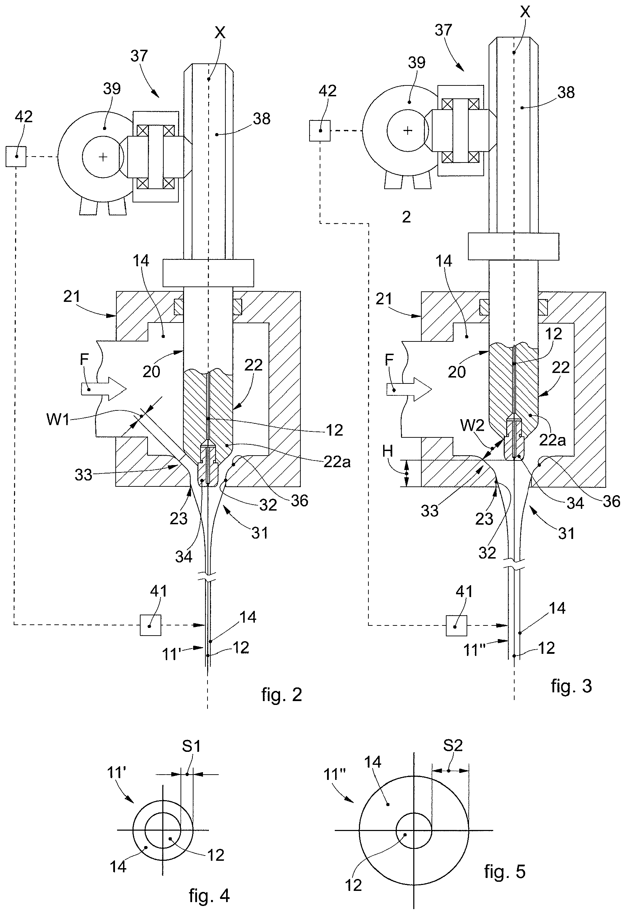

In accordance with some embodiments, described by way of example with reference to figs. 2 and 3, the production line 31 can have a substantially circular outlet aperture 32.

In this case the polymer material 14 is disposed on the entire circumference of the filiform core 12. The thickness in the radial direction can be constant or variable as a function of the alignment between the calibrating head 22 and the outlet aperture 32 with respect to the extrusion axis X.

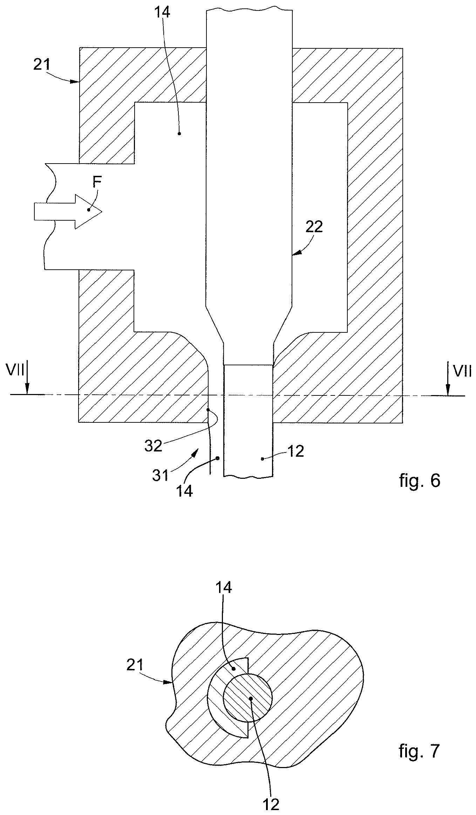

According to other variant embodiments, shown for example with reference to fig. 6, the outlet aperture 32 can have a lunette shape, or an angular sector, allowing the passage of the polymer material 14 only in one or more sectors, around the filiform core 12 (see fig. 7 for example).

In both cases, however, thanks to the vertical extrusion direction, the polymer material 14 is disposed around the filiform core 12 with uniform thickness in the axial direction due to the effect of the force of gravity, so that the extruded filiform article 11 has a constant section along its extension.

The edges and ends of the lead-in and connection portion 22a and the flared portion 33 can be advantageously beveled and rounded, so as to facilitate the uniform advance of the polymer material 14 toward the outlet aperture 32.

According to some embodiments, the thread-guide nozzle 34 has an outlet hole with a section coherent to that of the filiform core 12, that is, suitable to keep it aligned along the extrusion axis X when it passes through it.

According to some embodiments, the thread guide nozzle 34 is positioned perfectly coaxial to the outlet nozzle 23, so that the polymer material 14 is disposed uniformly around the filiform core 12, allowing to obtain in correspondence with the outlet aperture 32 a uniform thickness of the layer of polymer material 14.

According to the invention, the feeder body 20 is mobile axially along the extrusion axis X to position the calibrating head 22 at a desired height with respect to the outlet nozzle 23.

By adjusting the height of the calibrating head 22 with respect to the outlet nozzle 23, and therefore to the aperture 32, it is possible to adjust the width of the transit channel 36 for the polymer material 14, and hence modify the thickness of the layer of polymer material 14 around the filiform core 12.

According to some embodiments, the feeder body 20 is connected to positioning means 37 configured to move it axially along the axis X so as to position the calibrating head 22 at the desired height.

According to possible variants, the positioning devices 37 can be driven only at the start-up of the apparatus 10, for example at the beginning of the processing of a new batch of articles 11.

According to possible variants, the positioning devices 37 can also be driven during the normal functioning of the apparatus 10.

According to some embodiments, the positioning means 37 can comprise an adjustment screw 38, connected to the calibrating head 22; by rotating the adjustment screw 38 it is possible to modify the height H of the calibrating head 22 with respect to the outlet nozzle 23.

According to some embodiments, the adjustment screw 38 can be connected by suitable gears and kinematic mechanisms to a motor member 39 configured to make it rotate.

According to other variant embodiments, the adjustment screw 38 can be adjusted manually by an operator.

Figs. 2 and 3 show, by way of example, two possible positions of the calibrating head 22 with respect to the outlet nozzle 23, in particular with respect to the aperture 32, by means of which it is possible to obtain an article 11' as in fig. 4, or an article 11" as in fig. 5.

With reference to fig. 2, the calibrating head 22 is positioned at a height H equal to zero with respect to the aperture 32, and defines a transit channel 36 for the polymer material 14 from the co-extrusion body 21 toward the aperture 32 having a width W1, suitable to obtain a layer of polymer material 14 with a thickness S1 (fig. 4).

With reference to fig. 3, the calibrating head 22 is positioned at a height H greater than zero, and defines a transit channel 36 having a width W2, greater than W1, suitable to obtain a layer of polymer material 14 with a thickness S2 greater than S1 (fig. 5), given the same feed rate of the polymer material 14 and the speed of advance of the filiform core 12 with respect to the configuration of fig. 2.

In accordance with some solutions, the feeder body 20 has a tubular shape, and is connected, in correspondence with the opposite end to the calibrating head 22, to first feed means 24, configured to feed the filiform core 12 with a desired tension.

According to some embodiments, the first feed means 24 can comprise a wound coil 26 of filiform core 12, possibly connected to unwinding means.

According to some embodiments, the first feed means 24 also comprise tensioning and return devices 27 configured to feed the core 12 unwound from the reel 26 to the feeder body 20 uniformly, that is, without uncontrolled strains and tension variations.

The co-extrusion body 21 is connected to second feed means 25 configured to feed the polymer material 14.

According to some embodiments, the second feed means 25 comprise an extruder body 28 in which the polymer material 14 can be introduced in a liquid or dense form, or in the form of granules.

In cooperation with the extruder body 28, the second feed means 25 can comprise a hopper, metering pumps, able to introduce into the hopper the correct amount of material in relation to the flow rate of the apparatus 10, and static and dynamic mixers able to mix the polymer material 14 so as to prevent the formation of air bubbles, not shown in the drawings. The second feed means 25 can also comprise devices able to keep the level of the polymer material 14 constant in the hopper in such a way as to keep constant the exit pressure of the latter from the hopper itself.

The extruder body 28 is provided with compression means 29 configured to feed the polymer material 14 toward the co-extrusion body 21.

According to some embodiments of the invention, the compression means 29 feed the polymer material 14 toward the co-extrusion body 21 in a direction F transverse to the extrusion axis X.

According to possible embodiments, the compression means 29 can comprise a worm screw, sized in relation to the flow rate of the apparatus 10.

According to possible variants, not shown in the drawings, the compression means 29 can comprise double screw extruders.

According to possible variants, not shown in the drawings, the compression means 29 can comprise piston devices.

There can be thermal devices, not shown, in the extruder body 28, configured to heat or cool the polymer material 14 to the suitable temperature to give it an amorphous state and/or to give it the correct viscosity.

In accordance with other embodiments, the second feed means 25 can comprise metering devices 30, disposed between the compression means 29 and the co-extrusion body 21.

The metering devices 30 are configured to meter the polymer material 14 compressed by the compression means 29 and feed it to the co-extrusion body 21 in a uniform and continuous manner.

In the example shown, the metering devices 30 can comprise a gear metering pump and a plurality of pressure transducers, coordinated with the compression means 29.

The transducers can be disposed in such a way as to detect the pressure at entrance to and exit from the metering devices 30 and, based on the data detected, can send a signal to the compression means 29 to adjust the speed of the material and maintain a constant flow rate through the metering devices 30.

The co-extrusion body 21 feeds the outlet nozzle 23 uniformly with the polymer material 14, without creating bubbles inside it. In particular, the polymer material 14 advances through the transit channel 36 toward the aperture 32 thanks to the combination of the pressure exerted by the compression means 29, the disposition of the aperture 32 facing in a vertical direction, and the fact that the polymer material 14 tends to dispose itself around the filiform core 12 passing through the calibrating head 22 and is partially drawn by it.

In accordance with possible solutions, suction devices, not shown, can be provided, associated with the co-extrusion body 21 and configured to suck in any possible excess air present therein, further reducing the possibility of air bubbles forming in the material polymer 14.

The extruded article 11, exiting from the production line 31, advances vertically, partly due to the weight force, and partly drawn by the collection unit 18.

The collection unit 18 can comprise drawing devices 40, for example of the roller type, which exert a controlled traction force on the extruded article 11 and guarantee that the article 11 moves toward the stabilization station 16 maintaining a substantially vertical direction along the extrusion axis X, without any displacements in the horizontal direction.

Furthermore, the traction force exerted by the drawing devices 40 on the article 11 causes the thickness of the polymer material 14 to be reduced to the desired size.

According to some embodiments, the stabilization station 16 is located at a variable distance D from the extrusion station 15.

The distance D between the extrusion station 15 and the stabilization station 16 can be varied according to the type of the filiform core 12 and/or the type or thickness of the polymer material 14. By way of example only, the distance D can vary between about 20mm and about 2000mm.

The distance D can be varied, for example, according to the type of the polymer material 14, and in particular its viscosity, so that the stabilization station 16 correctly stabilizes the polymer material 14 in such a way as to guarantee that the extruded filiform article 11 has a constant section along its longitudinal extension.

According to some embodiments, the stabilization station 16 is provided with movement devices able to move it toward/away from the production line 31 of the extrusion station 15.

The stabilization station 16 can comprise a stabilization oven divided into zones with individual temperature regulation. For example, it is possible to have a first zone at a very high temperature, followed by one or more zones at a lower temperature, or the subsequent zones can have increasing temperatures.

In accordance with some embodiments, the temperature controlled zones can be chosen between hot air ovens, IR ovens, UV ovens, or microwave ovens.

The operating temperatures of the various zones can be selected according to the type of oven, the type of material of the filiform core 12, and the type or thickness of the polymer material 14. By way of example only, the temperatures in the stabilization station 16 can vary between about 200°C and about 550°C.

Downstream of the stabilization station 16, the cooling station 17 can possibly be present, in which the extruded article 11 can be cooled to temperatures close to room temperature before reaching the drawing devices 40 and the collection unit 18.

According to some embodiments, downstream of the drawing devices 40 the apparatus 10 comprises one or more thickness detection devices 41, able to detect the thickness of the final article 11.

According to further embodiments, additionally or alternatively, thickness detection devices 41 can also be provided in one or more intermediate position(s) between the extrusion station 15 and the collection unit 18.

The thickness detection devices 41 can be connected, via feedback control circuits, to the metering devices 30.

The feedback control circuits can comprise a control and command unit 42 able to receive information on the thickness detected by the thickness detection devices 41, and consequently command the metering devices 30 to increase or decrease the flow rate of the polymer material 14 toward the co-extrusion body 21, respectively to increase/reduce the thickness of the polymer material 14 given the same speed of feed of the filiform body 12.

According to possible variants, the control and command unit 42 can also command the first feed means 24 to adjust the speed of advance of the filiform core 12.

According to possible variant embodiments, the thickness detection devices 41 can be operatively connected to, or also connected to, positioning devices 37 to modify the width of the transit channel 36 and consequently the thickness of the layer of polymer material 14.

According to other variant embodiments, the thickness detection devices 41 can be operatively connected to, or also connected to, the drawing devices 40, in order to vary the traction force exerted on the extruded article 11 according to the thickness detected and/or the desired thickness in the final article 11.

The term "operatively connected" means that components or devices can be directly connected to each other in order to exchange data and/or commands, or they can be connected and communicate with each other by means of another component or device, for example the control and command unit 42.

According to other embodiments, the apparatus 10 can comprise control and detection devices able to control the physical characteristics of the article 11, for example the uniformity of section, elasticity, or other. The data detected can be transmitted to the control and command unit 40, which can command the feed means 24, 25, and/or the metering devices 30, to adjust the speed of advance of the core 12, or the pressure, or the flow rate of the polymer material 14.

The apparatus 10 can also comprise one or more surface treatment devices 43, configured to treat the surfaces of the article 11 to give it particular physical characteristics. For example, the surface treatment devices 43 can comprise a device for applying a lubricant.

According to some embodiments, the collection unit 18 can comprise, for example, winding devices 44 on which the article 11 obtained can be wound to form a coil, cutting devices of the extruded article 11, and/or containers in which the final products are introduced.

It is clear that modifications and/or additions of parts can be made to the apparatus 10 and method for covering a filiform core 12 as described heretofore, without departing from the field and scope of the present invention.

## Claims

1. Apparatus to cover a filiform core (12) with a silicone-based polymer material (14), comprising:
- an extrusion station (15) comprising a co-extrusion body (21) suitable to receive the polymer material (14), a feeder body (20) provided with a calibrating head (22) in which the filiform core (12) to be covered transits centrally, and an exit nozzle (23) through which the filiform core (12) exits from the co-extrusion body (21) with the polymer material (14) disposed at least partly around it, along an axis of extrusion (X), forming an extruded filiform article (11), said exit nozzle (23) being provided with an exit aperture (32) disposed so that said extrusion axis (X) is substantially vertical;
- a stabilization station (16), located downstream of said extrusion station (15); and
- a collection unit (18) to collect the extruded article (11), provided with drawing devices (40) able to exert a controlled traction force on said article (11) in order to guarantee at least that it advances toward said stabilization station (16) in a substantially vertical direction,
**characterized in that** said calibrating head (22) is aligned along said axis of extrusion (X) coaxial to said co-extrusion body (21) at least in proximity to said exit nozzle (23), and defines with said exit nozzle (23) a transit channel (36) for the polymer material (14) from the co-extrusion body (21) toward the aperture (32),
wherein said co-extrusion body (21) and said feeder body (20) are configured and disposed in such a way that the polymer material (14) is disposed around the filiform core (12) in correspondence with said outlet nozzle (23);
and wherein said calibrating head (22) is axially mobile in the direction of said extrusion axis (X) and is associated with positioning means (37) configured to move said calibrating head (22) and position it at a desired height with respect to said exit nozzle (23) and said aperture (32) in order to modify the amplitude of said transit channel (36) and consequently the quantity of polymer material (14) deposited around said filiform core (12) and the thickness of said extruded article (11).

2. Apparatus as in claim 1, **characterized in that** it comprises one or more thickness detection devices (41) located downstream of the drawing devices (40), able to detect the thickness of the final article (11).

3. Apparatus as in claim 1 or 2, **characterized in that** said thickness detection devices (41) are operatively connected to, or also connected to, said positioning devices (37) in order to modify the amplitude of the transit channel (36) and consequently the thickness of the layer of polymer material (14) during the production of said article (11).

4. Apparatus as in any claim hereinbefore, **characterized in that** it comprises first feed means (24) configured to feed said filiform core (12) with a desired tension in a direction aligned with said axis of extrusion (X), and second feed means (25) comprising an extruder body (28) provided with compression means (29) configured to feed said polymer material (14) under pressure into said co-extrusion body (21) in a direction (D) transverse to said axis of extrusion (X).

5. Apparatus as in any claim hereinbefore, **characterized in that** said exit nozzle (23) comprises a flared portion (33) whose section reduces from the co-extrusion body (21) toward the aperture (32), defining a lead-in to facilitate the advance of the polymer material (14).

6. Apparatus as in claim 5, **characterized in that** said calibrating head (22) comprises a lead-in and collection zone (22a) with a flared shape, and a thread-guide nozzle (34) suitable to feed said filiform core (12) coaxial to said exit nozzle (23), said calibrating head (22) and said exit nozzle (23) defining between them said transit channel (36) for said polymer material (14) from said co-extrusion body (21) to said exit aperture (32).

7. Apparatus as in claim 2, **characterized in that** said second feed means (25) comprises metering devices (30), configured to feed the polymer material (14) to the co-extrusion body (21) uniformly and continuously **and in that** said thickness detection devices (41) are connected by means of feedback control circuits with said metering devices (30) to adjust the functioning thereof in order to increase or decrease the delivery of the polymer material (14) toward the co-extrusion body (21) as a function of the thickness detected.

8. Apparatus as in claim 2, **characterized in that** said thickness detection devices (41) are operatively connected to, or also connected to, said drawing devices (40) in order to modify the traction force exerted by them on said extruded article (11) and consequently to modify the thickness of said article (11).

9. Method to cover a filiform core (12) with a silicone-based polymer material (14), the method providing to:
- feed said polymer material (14) in a fluid form into a co-extrusion body (21) of an extrusion station (15) provided with an exit nozzle (23);
- feed a filiform core (12) making it transit in a feeder body (20) provided with a calibrating head (22) toward said exit nozzle (23), said calibrating head (22) being aligned along an axis of extrusion (X) coaxial to said co-extrusion body (21);
**characterized in that** said co-extrusion body (21) and said feeder body (20) are disposed in such a way that the polymer material (14) is disposed around the filiform core (12) in correspondence with said outlet nozzle (23);
wherein the method further provides to:
- compress said polymer material (14) toward said co-extrusion body (21) so that it is disposed at least partly around said filiform core (12) in correspondence with said exit nozzle (23) in a transit channel (36) defined between said calibrating head (22) and said exit nozzle (36) from said co-extrusion body (21) toward said aperture (32);
- co-extrude said filiform core (12) and said polymer material (14) that at least partly surrounds it through an exit aperture (32) of said exit nozzle (23) along said axis of extrusion (X) disposed substantially vertical, obtaining an extruded article (11), and
- exert a controlled traction force on said article (11) by means of a unit (18) to collect the article (11) provided with drawing devices (40) to guarantee that said article (11) advances toward a stabilization station (17) in a substantially vertical direction,
wherein said method provides to move the calibrating head (22) axially in the direction of said extrusion axis (X) by means of positioning means (37) and to position it at a desired height with respect to said exit nozzle (23) and said aperture (32) in order to modify the amplitude of said transit channel (36) and consequently the quantity of polymer material (14) deposited around said filiform core (12) and the thickness of said extruded article (11).

10. Method as in claim 9, **characterized in that** it provides to dispose the polymer material (14) on the whole circumference of the filiform core (12).

11. Method as in claim 9 or 10, **characterized in that** it provides to dispose the polymer material (14) around the filiform core (12) with a constant thickness at least in the axial direction in order to obtain a filiform article (11) with a constant section.

12. Method as in any of the claims from 9 to 11, **characterized in that** it provides to detect the thickness of said article (11) downstream of said drawing devices (40) by means of thickness detection devices (41) and to move said calibrating head (22) axially as a function of said thickness detected during the covering operations of said core (12).

13. Method as in any claim from 9 to 12, **characterized in that** it provides to detect the thickness of said article (11) downstream of said drawing devices (40) by means of thickness detection devices (41) and to modify the traction force exerted by said drawing devices (40) as a function of said thickness detected.

14. Method as in any claim from 9 to 13, **characterized in that** the polymer material (14) used is a silicone in liquid form or a silicone rubber.

15. Filiform article made with the method in claim 9 and suitable for obtaining textile products, **characterized in that** said article comprises a filiform core (12) made of conductive silicone and a covering layer of polymer material (14) of non-conductive silicone disposed homogeneously and with a uniform thickness around said filiform core (12), or it comprises a filiform core (12) made of non-conductive silicone and a covering layer of polymer material (14) of conductive silicone disposed homogeneously and with a uniform thickness around said filiform core (12).

## Patentansprüche

1. Vorrichtung zum Bedecken eines fadenartigen Kerns (12) mit einen silikonbasierten Polymermaterial (14)
- mit einer Extrusionsstation (15), die einen Koextrusionskörper (21) aufweist, der dazu eingerichtet ist, das Polymermaterial (14) aufzunehmen, wobei ein Zuführkörper (20) mit einem Kalibrierkopf (22) ausgestattet ist, durch den der zu bedeckende fadenartige Kern (12) mittig durchläuft, und eine Auslassdüse (23) aufweist, durch die der fadenartige Kern (12) aus dem Koextrusionskörper (21) mit dem wenigstens teilweise umfänglich aufgebrachten Polymermaterial (14) entlang einer Extrusionsachse (X) austritt, um einen extrudierten fadenartigen Artikel (11) zu bilden, wobei die Auslassdüse (23) mit einer Auslassöffnung (32) ausgestattet ist, die so angeordnet ist, dass die Extrusionsachse (X) im Wesentlichen vertikal ist,
- mit einer Stabilisierstation (16), die in Förderrichtung unterhalb der Extrusionsstation (15) angeordnet ist, und
- mit einer Sammeleinheit (18), um den extrudierten Artikel (11) zu sammeln, die mit Ziehgeräten (40) ausgestattet ist, die dazu eingerichtet sind, eine kontrollierte Zugkraft auf den Artikel (11) auszuüben, um wenigstens sicherzustellen, dass er in einer im Wesentlichen vertikalen Richtung in Richtung der Stabilisierstation (16) läuft,
**dadurch gekennzeichnet, dass** der Kalibrierkopf (22) entlang der Extrusionsachse (X) wenigstens im Bereich der Auslassdüse (23) koaxial zu dem Koextrusionskörper (21) ausgerichtet ist und mit der Auslassdüse (23) einen Durchlasskanal (36) für das Polymermaterial (14) aus dem Koextrusionskörper (21) in Richtung der Öffnung (32) bildet,
wobei der Koextrusionskörper (21) und der Zuführkörper (20) derart eingerichtet und angeordnet sind, dass das Polymermaterial (14) in Abhängigkeit der Auslassdüse (23) um den fadenartigen Kern (12) aufgebracht wird, und
wobei der Kalibrierkopf (22) in der Richtung der Extrusionsachse (X) axial beweglich und mit Positioniermitteln (37) gekoppelt ist, die dazu eingerichtet sind, den Kalibrierkopf (22) zu bewegen und in einer gewünschten bestimmten Höhe im Bezug auf die Auslassdüse (23) sowie der Öffnung (32) anzuordnen, um die Größe des Durchlasskanals (36) und damit die Menge an um den fadenartigen Kern (12) aufgebrachten Polymermaterial (14) sowie die Dicke des extrudierten Artikels (11) zu verändern.

2. Vorrichtung nach Anspruch 1, **dadurch gekennzeichnet, dass** sie eine oder mehrere Gerätschaften (41) zur Dickenbestimmung abweist, die in Förderrichtung unterhalb der Ziehgeräte (40) angeordnet und dazu eingerichtet sind, die Dicke des endgültigen Artikels (11) zu bestimmen.

3. Vorrichtung nach Anspruch 1 oder 2, **dadurch gekennzeichnet, dass** die Gerätschaften (41) zur Dickenbestimmung mit oder auch mit den Positioniergerätschaften (37) gekoppelt sind, um die Größe des Durchlasskanals (36) und damit während der Herstellung des Artikels (11) die Dicke der Schicht an Polymermaterial (14) zu verändern.

4. Vorrichtung nach einem der voranstehenden Ansprüche, **dadurch gekennzeichnet, dass** sie weiterhin erste Zuführmittel (24) aufweist, die dazu eingerichtet sind, den fadenartigen Kern (12) mit einer gewünschten bestimmten Spannung in einer mit der Extrusionsachse (X) ausgerichteten Richtung zu fördern, und weiterhin über zweite Zuführmittel (24) verfügt, die einen Extruderkörper (28) aufweisen, der mit Komprimiermitteln (29) ausgestattet ist, die dazu eingerichtet sind, das Polymermaterial (14) unter Druck in den Koextrusionskörper (21) in einer zu der Extrusionsachse (X) rechtwinkligen Richtung (D) zu fördern.

5. Vorrichtung nach einem der voranstehenden Ansprüche, **dadurch gekennzeichnet, dass** die Auslassdüse (23) einen trichterartigen Bereich (33) aufweist, dessen Querschnitt sich von dem Koextrusionskörper (21) in Richtung der Öffnung (32) verringert, um zum Erleichtern des Durchlaufens des Polymermaterials (14) einen Einlass zu bilden.

6. Vorrichtung nach Anspruch 5, **dadurch gekennzeichnet, dass** der Kalibrierkopf (22) eine Einlass- und Sammelzone (22a) mit einer trichterartigen Gestalt aufweist und über eine mittels eines Gewindes geführte Düse (34) verfügt, die dazu eingerichtet ist, den fadenartigen Kern (12) der Auslassdüse (23) koaxial zuzuführen, wobei der Kalibrierkopf (22) und die Auslassdüse (23) zwischen sich den Durchlasskanal (36) für das Polymermaterial (14) von den Koextrusionskörper (21) zu der Auslassöffnung (32) ausbilden.

7. Vorrichtung nach Anspruch 2, **dadurch gekennzeichnet, dass** die zweiten Zuführmittel (25) über Messgerätschaften (30) verfügen, die dazu eingerichtet sind, das Polymermaterial (14) gleichförmig und kontinuierlich dem Koextrusionskörper (21) zuzuführen, und dass die Gerätschaften (41) zur Dickenmessung mittels Rückkoppelsteuerschaltkreise mit den Messgerätschaften (30) verbunden sind, um deren Funktionsweise einzustellen, um die Zufuhr an Polymermaterial (14) in Richtung des Koextrusionskörpers (21) als eine Funktion der erfassten Dicke zu erhöhen oder zu verringern.

8. Vorrichtung nach Anspruch 2, **dadurch gekennzeichnet, dass** die Gerätschaften (41) zur Dickenmessung mit oder auch mit den Ziehgeräten (40) betrieblich gekoppelt sind, um die durch sie auf den extrudierten Artikel (11) ausgeübte Zugkraft und damit die Dicke des Artikels (11) zu verändern.

9. Verfahren zum Bedecken eines fadenartigen Kerns (12) mit einem silikonbasierten Polymermaterial (14), wobei das Verfahren
- Zuführen des Polymermaterials (14) in einer flüssigen Form in einen Koextrusionskörper (21) einer Extrusionsstation (15), die mit einer Auslassdüse (23) ausgestattet ist, und
- Zuführen eines fadenartigen Kerns (12) aufweist, der einen Durchlauf durch einen Zuführkörper (20) erfährt, der mit einem Kalibrierkopf (22) in Richtung der Auslassdüse (23) ausgestattet ist, wobei der Kalibrierkopf (22) entlang einer Extrusionsachse (X) koaxial zu dem Koextrusionskörper (21) ausgerichtet ist,
**dadurch gekennzeichnet, dass** der Koextrusionskörper (21) und der Zuführkörper (20) derart angeordnet sind, dass das Polymermaterial (14) in Abhängigkeit der Auslassdüse (23) um den fadenartigen Kern (12) angeordnet ist,
wobei das Verfahren weiterhin
- Drücken des Polymermaterials (14) in Richtung des Koextrusionskörpers (21), so dass es sich in Abhängigkeit der Auslassdüse (23) in einen Übergangskanal (36), der zwischen dem Kalibrierkopf (22) und der Auslassdüse (36) von dem Koextrusionskörper (21) in Richtung der Öffnung (32) ausgebildet ist, wenigstens teilweise um den fadenartigen Kern (12) ablagert, und
- Koextrudieren des fadenartigen Kerns (12) und des Polymermaterials (14), das ihn wenigstens teilweise umgibt, durch eine Auslassöffnung (32) der Auslassdüse (23) entlang der in der im Wesentlichen vertikal ausgerichteten Extrusionsachse (X), um dadurch einen extrudierten Artikel (11) zu erhalten,
und
- Ausüben einer kontrollierten Zugkraft auf den Artikel (11) mittels einer Einheit (18) aufweist, um den mit den Ziehgeräten (40) bereitgestellten Artikel (11) zu sammeln, um sicherzustellen, dass der Artikel (11) in Richtung einer Stabilisierstation (17) in einer im Wesentlichen vertikalen Richtung läuft,
wobei das Verfahren ein Bewegen des Kalibrierkopfes (22) axial in Richtung der Extrusionsachse (X) mittels Positioniermitteln (37) und sein Anordnen in einer bestimmten gewünschten Höhe im Bezug auf die Auslassdüse (23) sowie die Öffnung (32) bereitstellt, um die Größe des Durchlasskanals (36) und damit die Menge an um den fadenartigen Kern (12) abgelagerten Polymermaterial (14) und die Dicke des extrudierten Artikels (11) zu verändern.

10. Verfahren nach Anspruch 9, **dadurch gekennzeichnet, dass** es vorsieht, das Polymermaterial (14) auf dem gesamten Umfang des fadenförmigen Kerns (12) anzuordnen.

11. Verfahren nach Anspruch 9 oder 10, **dadurch gekennzeichnet, dass** es vorsieht, das Polymermaterial (14) um den fadenförmigen Kern (12) mit einer konstanten Dicke zumindest in axialer Richtung anzuordnen, um einen fadenförmigen Gegenstand (11) mit einem konstanten Querschnitt zu erhalten.

12. Verfahren nach einem der Ansprüche 9 bis 11, **dadurch gekennzeichnet, dass** es vorsieht, die Dicke des Artikels (11) stromabwärts der Ziehvorrichtungen (40) mit Hilfe von Dickenerfassungsvorrichtungen (41) zu erfassen und den Kalibrierkopf (22) in Abhängigkeit von der während der Umhüllungsvorgänge des Kerns (12) erfassten Dicke axial zu bewegen.

13. Verfahren nach einem der Ansprüche 9 bis 12, **dadurch gekennzeichnet, dass** es vorsieht, die von den Ziehvorrichtungen (40) ausgeübte Dicke des Artikels (11) stromabwärts der Ziehvorrichtungen (40) in Abhängigkeit von der erfassten Dicke zu erfassen.

14. Verfahren nach einem der Ansprüche 9 bis 13, **dadurch gekennzeichnet, dass** das verwendete Polymermaterial (14) ein Silikon in flüssiger Form oder ein Silikonkautschuk ist.

15. Fadenförmiger Gegenstand, der nach dem Verfahren des Anspruchs 9 hergestellt und zur Herstellung von Textilerzeugnissen geeignet ist, **dadurch gekennzeichnet, dass** der Gegenstand einen fadenförmigen Kern (12) aus leitfähigem Silikon und eine Deckschicht aus Polymermaterial (14) aus nicht leitfähigem Silikon umfasst, die homogen und mit einer gleichmäßigen Dicke um den fadenförmigen Kern (12) herum angeordnet ist, oder dass er einen fadenförmigen Kern (12) aus nicht leitfähigem Silikon und eine Deckschicht aus Polymermaterial (14) aus leitfähigem Silikon umfasst, die homogen und mit einer gleichmäßigen Dicke um den fadenförmigen Kern (12) herum angeordnet ist.

## Revendications

1. Appareil pour recouvrir un noyau filiforme (12) avec un matériau polymère à base de silicone (14), comprenant :
- un poste d'extrusion (15) comprenant un corps de coextrusion (21) adapté pour recevoir le matériau polymère (14), un corps d'alimentation (20) doté d'une tête d'étalonnage (22) dans laquelle le noyau filiforme (12) à recouvrir passe e manière centrale, et une buse de sortie (23) à travers laquelle le noyau filiforme (12) sort du corps de coextrusion (21) avec le matériau polymère (14) disposé au moins partiellement autour de celui-ci, le long d'un axe d'extrusion (X), en formant un article filiforme extrudé (11), ladite buse de sortie (23) étant dotée d'une ouverture de sortie (32) disposée de sorte que ledit axe d'extrusion (X) est sensiblement vertical ;
- un poste de stabilisation (16), situé en aval dudit poste d'extrusion (15) ; et
- une unité de collecte (18) pour collecter l'article extrudé (11), dotée de dispositifs d'étirage (40) capables d'exercer une force de traction commandée sur ledit article (11) afin de garantir au moins qu'il avance vers ledit poste de stabilisation (16) dans une direction sensiblement verticale,
**caractérisé en ce que** ladite tête d'étalonnage (22) est alignée le long dudit axe d'extrusion (X) coaxialement par rapport audit corps de coextrusion (21) au moins à proximité de ladite buse de sortie (23), et définit avec ladite buse de sortie (23) un canal de passage (36) pour le matériau polymère (14) depuis le corps de coextrusion (21) vers l'ouverture (32),
dans lequel ledit corps de coextrusion (21) et ledit corps d'alimentation (20) sont configurés et disposés de telle sorte que le matériau polymère (14) est disposé autour du noyau filiforme (12) en correspondance avec ladite buse de sortie (23) ;
et dans lequel ladite tête d'étalonnage (22) est mobile axialement dans la direction dudit axe d'extrusion (X) et est associée à des moyens de positionnement (37) configurés pour déplacer ladite tête d'étalonnage (22) et la positionner à une hauteur souhaitée par rapport à ladite buse de sortie (23) et à ladite ouverture (32) afin de modifier l'amplitude dudit canal de passage (36) et par conséquent la quantité de matériau polymère (14) déposée autour dudit noyau filiforme (12) et l'épaisseur dudit article extrudé (11).

2. Appareil selon la revendication 1, **caractérisé en ce qu'**il comprend un ou plusieurs dispositifs de détection d'épaisseur (41) situés en aval des dispositifs d'étirage (40), capables de détecter l'épaisseur de l'article final (11).

3. Appareil selon la revendication 1 ou 2, **caractérisé en ce que** lesdits dispositifs de détection d'épaisseur (41) sont connectés de manière opérationnelle auxdits dispositifs de positionnement (37), ou également connectés à ceux-ci, afin de modifier l'amplitude du canal de passage (36) et, par conséquent, l'épaisseur de la couche de matériau polymère (14) pendant la production dudit article (11).

4. Appareil selon l'une quelconque des revendications précédentes, **caractérisé en ce qu'**il comprend des premiers moyens d'alimentation (24) configurés pour alimenter ledit noyau filiforme (12) avec une tension souhaitée dans une direction alignée avec ledit axe d'extrusion (X), et des seconds moyens d'alimentation (25) comprenant un corps d'extrusion (28) doté de moyens de compression (29) configurés pour alimenter ledit matériau polymère (14) sous pression jusque dans ledit corps de coextrusion (21) dans une direction (D) transversale audit axe d'extrusion (X).

5. Appareil selon l'une quelconque des revendications précédentes, **caractérisé en ce que** ladite buse de sortie (23) comprend une partie évasée (33) dont la section diminue à partir du corps de coextrusion (21) vers l'ouverture (32), en définissant une zone d'entrée pour faciliter l'avancée du matériau polymère (14).

6. Appareil selon la revendication 5, **caractérisé en ce que** ladite tête d'étalonnage (22) comprend une zone d'entrée et de collecte (22a) avec une forme évasée, et une buse de guidage de fil (34) appropriée pour alimenter ledit noyau filiforme (12) coaxialement par rapport à ladite buse de sortie (23), ladite tête d'étalonnage (22) et ladite buse de sortie (23) définissant entre elles ledit canal de passage (36) pour ledit matériau polymère (14) à partir dudit corps de coextrusion (21) vers ladite ouverture de sortie (32).

7. Appareil selon la revendication 2, **caractérisé en ce que** lesdits seconds moyens d'alimentation (25) comprennent des dispositifs de dosage (30), configurés pour alimenter le matériau polymère (14) vers le corps de coextrusion (21) de manière uniforme et continue et **en ce que** lesdits dispositifs de détection d'épaisseur (41) sont connectés au moyen de circuits de commande à rétroaction avec lesdits dispositifs de dosage (30) pour ajuster le fonctionnement de ceux-ci afin d'augmenter ou de diminuer la distribution du matériau polymère (14) vers le corps de coextrusion (21) en fonction de l'épaisseur détectée.

8. Appareil selon la revendication 2, **caractérisé en ce que** lesdits dispositifs de détection d'épaisseur (41) sont connectés de manière opérationnelle ou également connectés auxdits dispositifs d'étirage (40) afin de modifier la force de traction exercée par ceux-ci sur ledit article extrudé (11) et par conséquent de modifier l'épaisseur dudit article (11).

9. Procédé pour recouvrir un noyau filiforme (12) avec un matériau polymère à base de silicone (14), le procédé comprenant les étapes consistant à :
- alimenter ledit matériau polymère (14) sous une forme fluide jusque dans un corps de coextrusion (21) d'un poste d'extrusion (15) doté d'une buse de sortie (23) ;
- alimenter un noyau filiforme (12) en le faisant passer dans un corps d'alimentation (20) doté d'une tête d'étalonnage (22) vers ladite buse de sortie (23), ladite tête d'étalonnage (22) étant alignée le long d'un axe d'extrusion (X) coaxialement par rapport audit corps de coextrusion (21) ;
**caractérisé en ce que** ledit corps de coextrusion (21) et ledit corps d'alimentation (20) sont disposés de telle sorte que le matériau polymère (14) est disposé autour du noyau filiforme (12) en correspondance avec ladite buse de sortie (23) ;
dans lequel le procédé comprend en outre les étapes consistant à :
- comprimer ledit matériau polymère (14) vers ledit corps de coextrusion (21) de sorte qu'il soit disposé au moins partiellement autour dudit noyau filiforme (12) en correspondance avec ladite buse de sortie (23) dans un canal de passage (36) défini entre ladite tête d'étalonnage (22) et ladite buse de sortie (36) dudit corps de coextrusion (21) vers ladite ouverture (32) ;
- co-extruder ledit noyau filiforme (12) et ledit matériau polymère (14) qui l'entoure au moins partiellement à travers une ouverture de sortie (32) de ladite buse de sortie (23) le long dudit axe d'extrusion (X) disposé sensiblement verticalement, en obtenant un article extrudé (11), et
- exercer une force de traction commandée sur ledit article (11) au moyen d'une unité (18) pour collecter l'article (11) dotée de dispositifs d'étirage (40) pour garantir que ledit article (11) avance vers un poste de stabilisation (17) dans une direction sensiblement verticale,
dans lequel ledit procédé prévoit de déplacer la tête d'étalonnage (22) axialement dans la direction dudit axe d'extrusion (X) au moyen de moyens de positionnement (37) et de la positionner à une hauteur souhaitée par rapport à ladite buse de sortie (23) et à ladite ouverture (32) afin de modifier l'amplitude dudit canal de passage (36) et par conséquent la quantité de matériau polymère (14) déposée autour dudit noyau filiforme (12) et l'épaisseur dudit article extrudé (11).

10. Procédé selon la revendication 9, **caractérisée en ce qu'**il prévoit de disposer le matériau polymère (14) sur toute la circonférence du noyau filiforme (12).

11. Procédé selon la revendication 9 ou 10, **caractérisé en ce qu'**il prévoit de disposer le matériau polymère (14) autour du noyau filiforme (12) avec une épaisseur constante au moins dans la direction axiale afin d'obtenir un article filiforme (11) avec une section constante.

12. Procédé selon l'une quelconque des revendications 9 à 11, **caractérisé en ce qu'**il prévoit de détecter l'épaisseur dudit article (11) en aval desdits dispositifs d'étirage (40) au moyen de dispositifs de détection d'épaisseur (41) et de déplacer ladite tête d'étalonnage (22) axialement en fonction de ladite épaisseur détectée lors des opérations de recouvrement dudit noyau (12).

13. Procédé selon l'une quelconque des revendications 9 à 12, **caractérisé en ce qu'**il prévoit de détecter l'épaisseur dudit article (11) en aval desdits dispositifs d'étirage (40) au moyen de dispositifs de détection d'épaisseur (41) et de modifier la force de traction exercée par lesdits dispositifs d'étirage (40) en fonction de ladite épaisseur détectée.

14. Procédé selon l'une quelconque des revendications 9 à 13, **caractérisé en ce que** le matériau polymère (14) utilisé est une silicone sous forme liquide ou un caoutchouc de silicone.

15. Article filiforme fabriqué avec le procédé de la revendication 9 et approprié pour obtenir des produits textiles, **caractérisé en ce que** ledit article comprend un noyau filiforme (12) réalisé en silicone conducteur et une couche de recouvrement de matériau polymère (14) réalisée en silicone non conducteur disposée de manière homogène et avec une épaisseur uniforme autour dudit noyau filiforme (12), ou **en ce qu'**il comprend un noyau filiforme (12) en silicone non conducteur et une couche de recouvrement de matériau polymère (14) réalisée en silicone conducteur disposée de manière homogène et avec une épaisseur uniforme autour dudit noyau filiforme (12).
